# EUROPEAN PATENT APPLICATION

(11) **EP 4 597 657 A1**
(43) Date of publication of application: **06.08.2025**
(21) Application number: 24793052.2
(22) Date of filing: 19.04.2024
(51) Int. Cl.: H01M 10/04, H01M 50/533

(54) **ELECTRODE ASSEMBLY AND METHOD OF MANUFACTURING ELECTRODE ASSEMBLY**

(30) Priority: 20.04.2023 KR 20230051864; 18.04.2024 KR 20240052125
(71) Applicant: LG Energy Solution, Ltd., Seoul 07335 (KR)
(72) Inventor: KIM, Taejong, Daejeon 34122 (KR)
(74) Representative: Goddar, Heinz J.
(86) International application number: PCT/KR2024/005271
(87) International publication number: WO 2024/219867

(57) **Abstract**

An electrode assembly according to one embodiment of the present disclosure is an electrode assembly in which an electrode unit and an assembly cathode are sequentially stacked, wherein the electrode unit comprises: an anode whose first surfaces are folded in directions facing each other; a unit cathode located between the folded first surfaces; and a first separator located between the first surface and the unit cathode, wherein the first surface surrounds the upper and lower surfaces of the unit cathode and one side surface of the unit cathode, and both end parts of the first surface extend along the upper and lower surfaces of the unit cathode.

## Description

### [TECHNICAL FIELD]

### Cross Citation with Related Application(s)

This application claims the benefit of Korean Patent Application No. 10-2023-0051864 filed on April 20, 2023 and Korean Patent Application No. 10-2024-0052125 filed on April 18, 2024 in the Korean Intellectual Property Office, the disclosures of which are incorporated herein by reference in their entirety.

The present disclosure relates to an electrode assembly and a method for manufacturing the electrode assembly, and more particularly, to an electrode assembly having improved manufacturing stability and productivity and a method for manufacturing the electrode assembly.

### [BACKGROUND]

With the technology development and increased demand for mobile devices, demand for secondary batteries as energy sources has been rapidly increasing. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

Based on the shape of a battery case, a secondary battery may be classified into a cylindrical battery having an electrode assembly mounted in a cylindrical metal container, a prismatic battery having an electrode assembly mounted in a prismatic metal container, or a pouch type battery having an electrode assembly mounted in a pouch-shaped case made of an aluminum laminate sheet. Here, the electrode assembly mounted in the battery case serves as a power generating element capable of charging/discharging and including a stacked structure of a cathode, an anode and a separator interposed between the cathode and the anode. The electrode assembly may be classified into jelly-roll types formed by interposing a separator between a long sheet type cathode and a long sheet type anode and winding them, stacked types formed by sequentially stacking a plurality of cathodes and anodes having a predetermined size with separators being interposed between the cathode and the anode, and zigzag types folded into a zigzag shape in a state where the anode is wrapped with a separator, and then the cathode is crossed and stacked on both sides of the separator.

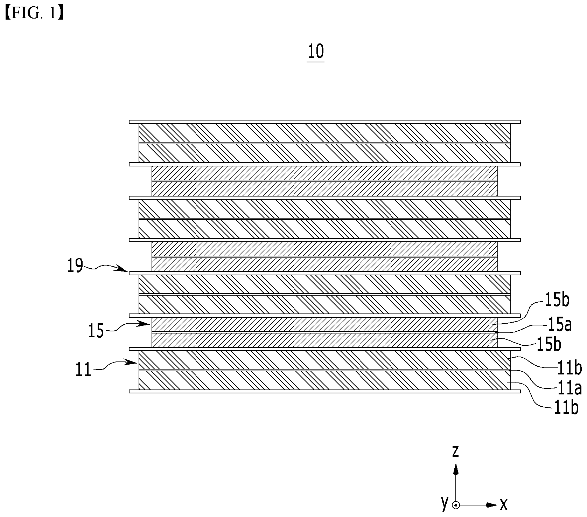

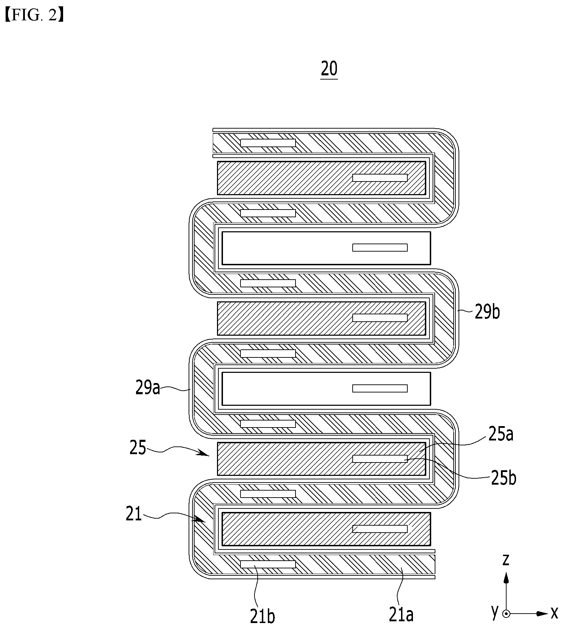

FIG. 1 and FIG. 2 are cross-sectional views of a conventional electrode assembly.

As shown in FIG. 1, a stacked type electrode assembly 10 has a structure in which an anode 11 in which an anode active material layer 11a is located on the upper and lower surfaces of an anode current collector 11b, a cathode 15 in which a cathode active material layer 15b is located on the upper and lower surfaces of a cathode current collector 15a, and a separator interposed between the anode 11 and the cathode 15 are sequentially stacked. Particularly, the stacked type electrode assembly 10 has a structure in which the side surface of the electrode assembly is exposed to the outside, so that each component can be easily damaged by an external impact, and stability against a risk of short circuit may be deteriorated.

In addition, as shown in FIG. 2, the zigzag type electrode assembly 20 has a structure in which the anode 21 is wrapped with separators 29a and 29b, and then the cathode 25 is cross-stacked on both sides of the separators 29a and 29b, wherein the anode 21 is folded into a zigzag shape. Here, the anode 21 includes an anode active material layer 21a, an anode current collector (not shown), and an anode tab 21b, and the cathode 25 includes a cathode active material layer 25a, an anode current collector (not shown), and a cathode tab 25b. Here, the anode current collector (not shown) is located inside the anode active material layer 21a, and the anode tab 21b extending from the anode current collector (not shown) extends to the outside of the anode 21. The cathode 25 can also be explained similarly.

However, in the case of the zigzag type electrode assembly 20, it has a structure in which one anode 21 is folded into a zigzag shape, which make it difficult to disassemble and reassemble the electrode assembly 20 in case of a manufacturing defect. That is, it is impossible to reuse the anode 21, which causes a problem that productivity is reduced.

Further, in the case of the zigzag type electrode assembly 20, it may not be easy to fold the anode 21 at regular intervals when folding into a zigzag shape in that the anode 21 has a relatively long length. In particular, when manufacturing the zigzag type electrode assembly 20, it may be difficult to manufacture the folded structure of the anode 21 consistently due to an error of the position where the cathode 25 is stacked on the anode 21. Further, if an abnormality occurs during the production process of the zigzag type electrode assembly 20, there is a problem that the productivity is reduced in that the entire production process is interrupted.

Further, although not shown in FIG. 1 and FIG. 2, similar to the zigzag type electrode assembly 20, even in the case of a jelly-roll type electrode assembly configured to have a structure in which a long sheet-type cathode and a long sheet-type anode, each coated with active materials, are wound with a separator disposed between the cathode and the anode, it may not be easy to wind the electrodes at regular intervals at the time of winding, and if an abnormality occurs during the production process, there is a problem that productivity is reduced in that the entire production process is interrupted. In particular, in the case of a j elly-roll type electrode assembly, the thickness of the active material layer may differ depending on the upper and lower positions so as to facilitate winding, which causes problems such as a decrease in battery capacity.

Therefore, unlike conventional electrode assemblies, there is a need to develop an electrode assembly with a structure having improved manufacturing stability and productivity.

### [DETAILED DESCRIPTION OF THE INVENTION]

### [Technical Problem]

Therefore, it is an object of the present disclosure to provide an electrode assembly having improved manufacturing stability and productivity and a method for manufacturing the electrode assembly.

The objects of the present disclosure are not limited to the aforementioned objects, and other objects which are not mentioned herein should be clearly understood by those skilled in the art from the following detailed description and the accompanying drawing.

### [Technical Solution]

According to one embodiment of the present disclosure, there is provided an electrode assembly in which an electrode unit and an assembly cathode are sequentially stacked, wherein the electrode unit comprises: an anode whose first surfaces are folded in directions facing each other; a unit cathode located between the folded first surfaces; and a first separator located between the first surface and the unit cathode, wherein the first surface surrounds the upper and lower surfaces of the unit cathode and one side surface of the unit cathode, and both end parts of the first surface extend along the upper and lower surfaces of the unit cathode.

The first separator is attached to the first surface, and the both end parts of the first separator may extend to both end parts of the first surface.

Both end parts of the first separator extend over the upper and lower surfaces of the unit cathode up to the other side surface of the unit cathode, respectively, and at the other side surface of the unit cathode, both end parts of the first separator may be joined to each other.

Both end parts of the anode may extend over the upper and lower surfaces of the unit cathode up to the other side surface of the unit cathode, respectively, and at the other side surface of the unit cathode, both end parts of the cathode may be joined to each other

The first separator may be attached to the upper and lower surfaces of the unit cathode and both side surfaces of the unit cathode.

The first separator may be attached to the upper and lower surfaces of the unit cathode and one side surface of the unit cathode, and both end parts of the first separator may extend along the upper and lower surfaces of the unit cathode, respectively.

The both end parts of the first separator may extend over the upper and lower surfaces of the unit cathode up to the other side surface of the unit cathode, respectively, and at the other side surface of the unit cathode, both end parts of the first separator may be joined to each other.

The assembly cathode is located on a second surface which is a surface opposite to the first surface, the electrode assembly further includes a second separator which is located between the assembly cathode and the second surface, and is attached to the second surface, and the both end parts of the second separator may extend to both end parts of the second surface.

Both end parts of the second separator may extend over the side surfaces of both end parts of the anode to the side surface of the unit cathode, respectively, and at the other side surface of the unit cathode, both end parts of the second separator may be joined to each other.

The both end parts of the anode may extend over the upper and lower surfaces of the unit cathode up to the other side surface of the unit cathode, respectively, and at the other side surface of the unit cathode, the both end parts of the anode may be joined to each other.

The assembly cathode may be located on a second surface which is a surface opposite to the first surface, and the electrode assembly may further include an external separator which is located between the assembly cathode and the second surface, and is attached to at least a portion of the surface of the assembly cathode.

The external separator may include a first external separator attached to the upper surface of the assembly cathode and a second external separator attached to the lower surface of the assembly cathode.

The external separator may be attached to the upper and lower surfaces of the assembly cathode and both side surfaces of the assembly cathode.

The external separator may be attached to the upper and lower surfaces of the assembly cathode and one side surface of the assembly cathode, and the both end parts of the external separator may extend along the upper and lower surfaces of the assembly cathode.

The both end parts of the external separator may extend over the upper and lower surfaces of the assembly cathode up to the other side surface of the assembly cathode, and on the other side of the assembly cathode, the both end parts of the external separator may be joined to each other.

At least one anode tab included in the anode and a unit cathode tab included in the unit cathode may extend in directions equal to each other, respectively, the at least one anode tab may be located on vertical lines equal to each other, and the at least one anode tab and the unit cathode tab may be located on vertical lines different from each other.

At least one anode tab included in the anode and the unit cathode tab included in the unit cathode may extend in directions different from each other, respectively.

The at least one anode tab may be a single anode tab which extends along one side of the anode.

According to another embodiment of the present disclosure, there is provided a method for manufacturing the above-mentioned electrode assembly, the method comprising the steps of: displaying a folding line displayed at the center of the first surface of the anode; folding the first surface of the anode on the basis of the folding line; locating the unit cathode on a partial surface of the folded first surface; and folding the remaining surface of the first surface toward the upper surface of the unit cathode on the basis of the folding line, wherein the first separator is attached onto the first surface, or is attached to at least a portion of the outer surface of the unit cathode.

The method for manufacturing the electrode assembly further comprises locating the assembly cathode on a second surface which is a surface opposite to the first surface located on the upper surface of the unit cathode, wherein the electrode assembly comprises a second separator or an external separator located between the second surface and the assembly cathode, and wherein the second separator may be attached onto the second surface, and the external separator may be attached to at least a portion of the outer surface of the assembly cathode.

### [Advantageous Effects]

According to embodiments, the present disclosure provides an electrode assembly in which an electrode unit and an assembly cathode are sequentially stacked, and a method for manufacturing the same, wherein the electrode assembly has a structure in which an anode included in the electrode unit is folded to surround the upper and lower surfaces and one side surface of the cathode, thereby capable of improving the manufacturing stability and productivity.

The effects of the present disclosure are not limited to the effects mentioned above and additional other effects not described above will be clearly understood from the detailed description and the accompanying drawings by those skilled in the art.

### [BRIEF DESCRIPTION OF THE DRAWINGS]

FIG. 1 and FIG. 2 are cross-sectional views of a conventional electrode assembly.
FIG. 3 is a perspective view of an electrode assembly according to one embodiment of the present disclosure.
FIG. 4 is a cross-sectional view of the electrode assembly of FIG. 3.
FIG. 5 to FIG.10 are perspective views of an electrode unit included in an electrode assembly according to another embodiment of the present disclosure.
FIG. 11 is a perspective view of the assembly cathode included in the electrode assembly according to another embodiment of the present disclosure.
FIG. 12 and FIG. 13 are diagrams showing a method for manufacturing an electrode unit included in an electrode assembly according to one embodiment of the present disclosure.
FIG. 14 to FIG. 16 are perspective views showing various arrangement shapes of a cathode tab and an anode in an electrode unit included in an electrode assembly according to another embodiment of the present disclosure.
FIG. 17 is a diagram showing a shape in which an electrode unit and an assembly cathode included in the electrode assembly according to one embodiment of the present disclosure are stored.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and thus, the present disclosure is not necessarily limited to those illustrated in the drawings. In the drawings, the thickness of layers, regions, etc. are exaggerated for clarity. In the drawings, the thicknesses of some layers and region are exaggerated for convenience of description.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

Now, an electrode assembly according to one embodiment of the present disclosure will be described.

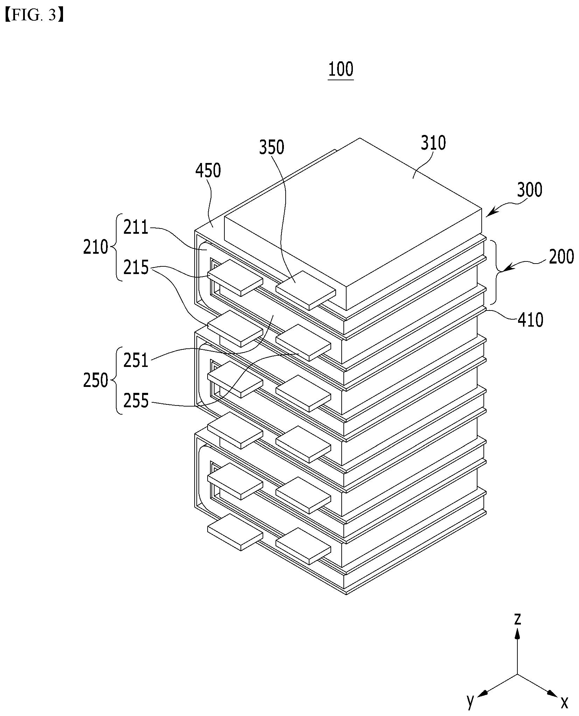

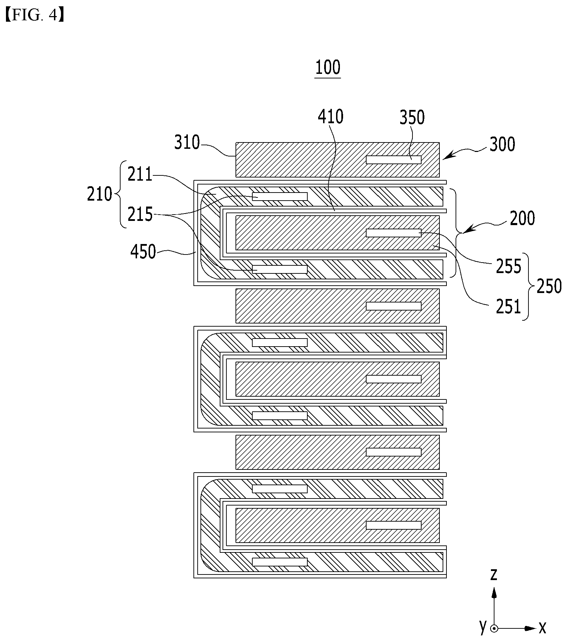

FIG. 3 is a perspective view of an electrode assembly according to one embodiment of the present disclosure. FIG. 4 is a cross-sectional view of the electrode assembly of FIG. 3.

Referring to FIG. 3 and FIG. 4, the electrode assembly 100 according to one embodiment of the present disclosure may be an electrode assembly in which an electrode unit 200 and an assembly cathode 300 are sequentially stacked. More specifically, the electrode assembly 100 may have a structure in which the assembly cathode 300 is stacked on the electrode unit 200 in a state that the electrode unit 200 is located at the bottommost, and such a structure may be repeated multiple times.

Here, the assembly cathode 300 is a component that is distinct from the electrode unit 200, wherein the assembly cathode 300 is sequentially stacked with the electrode unit 200 to form an electrode assembly 100, and the assembly cathode 300 may be located outside the electrode unit 200. In other words, the assembly cathode 300 may refer to a cathode located on the upper and/or lower surface of the electrode unit 200.

Further, the electrode assembly 100 according to one embodiment of the present disclosure may have a structure in which as shown in FIG. 3 and FIG. 4, while the electrode unit 200 and the assembly cathode 300 are sequentially stacked, the anode 210 included in one electrode unit 200 and the anode 210 included in the other electrode unit 200 are separated, and one assembly cathode 300 and the other assembly cathode 300 are also separated. In other words, the assembly cathode 300 is disposed between electrode units 200 located adjacent to each other, so that the anodes 210 included in the electrode units 200 located adjacent to each other may be spaced apart from each other. In addition, the electrode unit 200 is disposed between the assembly cathodes 300 located adjacent to each other, so that the assembly cathodes 300 located adjacent to each other may be spaced apart from each other.

Therefore, the electrode assembly 100 according to the present embodiment can be manufactured by sequentially stacking the electrode unit 200 and the assembly cathode 300 that have been manufactured and/or stored in advance in a semi-finished product state, thereby simplifying the production process of the electrode assembly 100 and also increasing the production speed. In addition, the electrode assembly 100 according to the present embodiment has the advantage that the electrode unit 200 and the assembly cathode 300 can be manufactured and/or stored separately, so that the manufacturing and storage processes of the electrode unit 200 and the assembly cathode 300 are divided, and the productivity and manufacturing stability of the electrode assembly 100 are improved. Referring to FIG. 3 and FIG. 4, the electrode unit 200 includes an anode 210 whose first surfaces are folded in directions facing each other; a unit cathode 250 located between the folded first surfaces; and a first separator 410 located between the first surface and the unit cathode 250.

Here, the unit cathode 250 is a component included in the electrode unit 200, wherein the unit cathode 250 is located between the first surfaces on which the anode 210 is folded to thereby constitute the electrode unit 250, and the unit cathode 250 may be located inside the electrode unit 200. In other words, the unit cathode 300 may refer to a cathode located between the folded first surfaces of the anode 210 in the electrode unit 200.

More specifically, the anode 210 may include an anode active material layer 211 and an anode tab 215. Although not shown in FIG. 3 and FIG. 4, the anode active material layer 211 may be located on at least one of the upper and lower surfaces of the anode current collector (not shown). As one example, the anode 210 may have a structure in which an anode active material layer 211 is formed on the upper and lower parts with an anode current collector (not shown) interposed between them, as shown in FIG. 3 and FIG. 4. Here, the anode current collector (not shown) is omitted on the drawing for convenience of explanation in that the anode current collector (not shown) is located inside the anode active material layer 211. Further, the anode tab 215 is a portion extending from the anode current collector (not shown), which may be a portion where the anode active material layer 211 is not located on the upper and lower surfaces of the anode current collector (not shown). As one example, the anode tab 215 may protrude toward the outside from one of the side surfaces of the anode current collector (not shown) located inside the anode active material layer 211.

The anode current collector (not shown) is not particularly limited as long as it has high conductivity without causing a chemical change in the battery, and for example, copper, stainless steel, aluminum, nickel, titanium, fired carbon, or copper or stainless steel of which surface is treated with carbon, nickel, titanium, silver, or the like, an aluminum-cadmium alloy, or the like may be used.

The anode active material layer 211 may be manufactured in such a manner that an anode slurry containing an anode active material is attached or coated onto an anode current collector (not shown), wherein the anode slurry may further include a conductive material and a polymer material in addition to the anode active material.

More preferably, a lithium metal may be used as the anode active material. That is, in this case, the anode active material layer 211 may refer to a lithium metal layer. In particular, the lithium metal is softer than graphite used in conventional anode, and the lithium metal has the characteristic of being foldable. In addition, the lithium metal has the advantage that it can be easily joined to other components with relatively less strong compression compared to materials used in conventional anodes.

Therefore, in the electrode assembly 100 according to the present embodiment, the anode active material layer 211 included in the anode 210 contains a lithium metal, so that the anode 210 may have a structure that is folded with the unit cathode 250 in between, as shown in FIG. 3 and FIG. 4. In addition, as will be described below, since the anode 210 included in the electrode unit 200 has relatively high adhesion properties, there is an advantage that the electrode unit 200 and the cathode 300 can be assembled by a pick and place (P&P) system when manufacturing the electrode assembly 100.

Further, the unit cathode 250 may include a unit cathode active material layer 251, a unit cathode current collector (not shown), and a unit cathode tab 255. Although not shown in FIG. 3 and FIG. 4, the unit cathode active material layer 251 may be located on at least one of the upper and lower surfaces of the unit cathode current collector (not shown). As one example, the unit cathode 250 may have a structure in which as shown in FIG. 3 and FIG. 4, a unit cathode active material layer 251 is formed at the upper and lower parts with the unit cathode current collector (not shown) interposed between them. Here, the unit cathode collector (not shown) is omitted from the drawings for convenience of explanation, in that the unit cathode collector (not shown) is located inside the unit cathode active material layer 211. Further, the unit cathode tab 255 may be a portion where the unit cathode active material layer 251 is not located on the upper and lower surfaces of the unit cathode current collector (not shown). As one example, the unit cathode tab 255 may protrude toward the outside from one of the side surfaces of the unit cathode current collector (not shown) located inside the unit cathode active material layer 251.

The unit cathode current collector (not shown) is not particularly limited as long as it has high conductivity without causing a chemical change in the battery, and for example, stainless steel, aluminum, nickel, titanium, fired carbon, or aluminum or stainless steel of which surface is treated with carbon, nickel, titanium, silver, or the like may be used.

The unit cathode active material layer 251 may be manufactured in such a manner that a cathode slurry containing a cathode active material is attached or coated onto the unit cathode current collector (not shown), wherein the cathode slurry may further include a conductive material and a polymer material in addition to the cathode active material. The cathode active material may include, for example, lithium cobalt oxide(LiCoO₂), lithium nickel oxide(LiNiO₂); lithium manganese oxide; lithium copper oxide (Li₂CuO₂); vanadium oxide; Ni-site type lithium nickel oxide; lithium manganese complex oxide; LiMn₂O₄ having a part of Li in the formula being substituted with alkaline earth metal ions; a disulfide compound; Fe₂(MoO₄)₃, and the like. However, the cathode active material is not limited thereto, and any material generally used in lithium secondary batteries may be used as the cathode active material.

More specifically, based on the state before the anode 210 is folded as shown in FIG. 3 and FIG. 4, the first surface may be one of the upper and lower surfaces of the anode 210. As one example, when the first surface is the upper surface of the anode 210, the anode 210 may be folded in a direction in which the upper surfaces of the anode 210 face each other. On the contrary, when the first surface is the lower surface of the anode 210, the anode 210 may be folded in a direction where the lower surfaces of the anode 210 face each other. Further, the unit cathode 250 may be located between the folded first surfaces. More specifically, the distance of separation between the folded first surfaces of the anode 210 may be equal to or greater than the thickness of the unit cathode 250.

Further, in the electrode unit 200, the first side of the anode 210 surrounds the upper and lower surfaces of the unit cathode 250 and one side surface of the unit cathode 250, and both end parts of the first surface extend along the upper and lower surfaces of the unit cathode 250. As one example, the anode 210 has a structure that is folded once, and may cover the upper and lower surfaces of the unit cathode 250 and one side surface of the unit cathode 250. As another example, the anode 210 has a shape folded like alphabetic character C, and may surround the upper and lower surfaces of the unit cathode 250 and one side surface of the unit cathode 250. That is, the other side surface of the unit cathode 250 may not be covered with the anode 210.

Further, in the electrode unit 200, the first separator 410 may be located between the first surface of the anode 210 and the unit cathode 250. As will be described below, the first separator 410 may be attached to the first surface of the anode 210 or the unit cathode 250.

Here, the first separator 410 separates the anode 210 and the unit cathode 250 from each other, and provides a moving path for lithium ions. The separator can be used without particular limitation as long as it is used as a separator in a typical lithium secondary battery. Particularly, it is preferable that the separator has a low resistance against the ion migration of the electrolyte and has an excellent ability to impregnate the electrolyte.

Therefore, the electrode assembly 100 according to the present embodiment has a structure in which the anode 210 included in the electrode unit 200 is folded while surrounding the unit cathode 250, thereby preventing the unit cathode 250 from being exposed to the outside, preventing it from being easily damaged from external impacts, and improving stability against a risk of short circuit. In addition, the electrode unit 200 can be stored in a semi-finished product state having the above-mentioned structure, and thus has the advantage that it can be stored separately even if an abnormality occurs during the production process, and the productivity and manufacturing stability are improved.

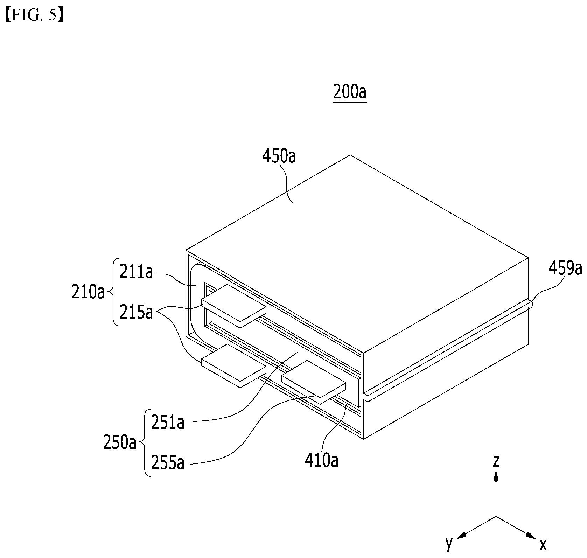

FIG. 5 to FIG. 10 are perspective views of an electrode unit included in an electrode assembly according to another embodiment of the present disclosure.

Referring to FIG. 4 to FIG. 7, in the electrode units 200, 200a and 200b included in the electrode assembly 100 according to one embodiment of the present disclosure, the first separators 410, 410a and 410b may be attached to the first surface of the anodes 210, 210a and 210b. More specifically, in the electrode units 200, 200a and 200b, both end parts of the first separator 410 may extend to both end parts of the first surfaces of the anodes 210, 210a and 210b.

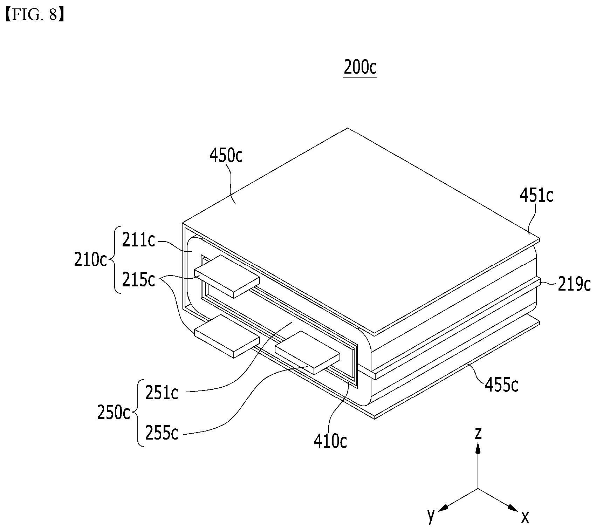

Referring to FIG. 8 to FIG. 10, in the electrode units 200c, 200d and 200e included in the electrode assembly 100 according to the present embodiment, the first separators 410c, 410d and 410e are attached to the first surface of the anodes 210c, 210d and 210e, and both end parts of the first separators 410c, 410d and 410e may extend over the upper and lower surfaces of the unit cathodes 250c, 250d and 250e up to the other side surface of the unit cathodes 250c, 250d and 250e, respectively. In particular, at the other side surface of the unit cathodes 250c, 250d and 250e, both end parts of the first separators 410c, 410d and 410e may be joined to each other.

As one example, both end parts of the first separators 410c, 410d and 410e may be joined to each other by an ultrasonic or heat sealing method. As another example, both end parts of the first separators 410c, 410d and 410e may be joined to each other by an adhesive agent or a cohesive agent. However, the method is not limited thereto, and can be applied to the present embodiment as long as it a method capable of joining both end parts of the first separators 410c, 410d and 410e.

Further, as shown in FIG. 8 to FIG. 10, in the electrode units 200c, 200d and 200e, both end parts of the anodes 210c, 210d and 210e may extend over the upper and lower surfaces of the unit cathodes 250c, 250d, and 250e up to the other side surface of the unit cathodes 250c, 250d and 250e, respectively. More specifically, the anodes 210c, 210d and 210e extend toward the outside from the other side surface of the unit cathodes 250c, 250d and 250e, and both end parts of the anodes 210c, 210d and 210e may be folded along the other side surface of the unit cathodes 250c, 250d and 250e, respectively.

In particular, at the other side surface of the unit cathodes 250c, 250d and 250e, both end parts of the anodes 210c, 210d and 210e may be joined to each other. That is, as shown in FIG. 8 to FIG. 10, in the electrode units 200c, 200d, and 200e, the anode joint parts 219c, 219d and 219e in which both end parts of the anodes 210c, 210d and 210e are joined to each other may be formed.

As one example, both end parts of the anodes 210c, 210d and 210e may be joined to each other by an ultrasonic or heat sealing method. As another example, both end parts of the anodes 210c, 210d and 210e may be joined to each other by an adhesive agent or a cohesive agent. However, the method is not limited thereto, and can be applied to the present embodiment as long as it is a method capable of joining both end parts of the anodes 210c, 210d and 210e.

Therefore, in the electrode assembly 100 according to the present embodiment, the electrode units 200, 200a, 200b, 200c, 200d and 200e may have a structure in which as shown in FIG. 5 to FIG. 10, first separators 410, 410a, 410b, 410c, 410d and 410e are attached to the first surface of the anodes 210, 210a, 210b, 210c, 210d and 210e in various shapes.

At this time, the unit cathodes 250, 250a, 250b, 250c, 250d and 250e may be inserted between the folded first surfaces of the anodes 210, 210a, 210b, 210c, 210d and 210e in a state that a separate separator is not joined. Further, the unit cathodes 250, 250a, 250b, 250c, 250d and 250e are not joined by a separate separator, and thus may be used as an assembly cathode 300,or may also be used in other manufacturing processes.

In particular, in the electrode units 200, 200a, 200b, 200c, 200d and 200e as shown in FIG. 5 to FIG. 10, in the process of folding the anodes 210, 210a, 210b, 210c, 210d and 210e, the first surface of the anode can be protected by the first separators 410, 410a, 410b, 410c, 410d and 410e, so that the anodes 210, 210a, 210b, 210c, 210d and 210e can be prevented from being damaged during the production process.

In addition, in the electrode assembly 100 according to the present embodiment, the electrode units 200c, 200d and 200e may have a structure in which as shown in FIG. 8 to FIG. 10, the upper and lower surfaces and both side surfaces of the unit cathodes 250c, 250d and 250e are covered with first separators 410c, 410d and 410e, which provides the advantage that stability against a risk of short circuit is improved.

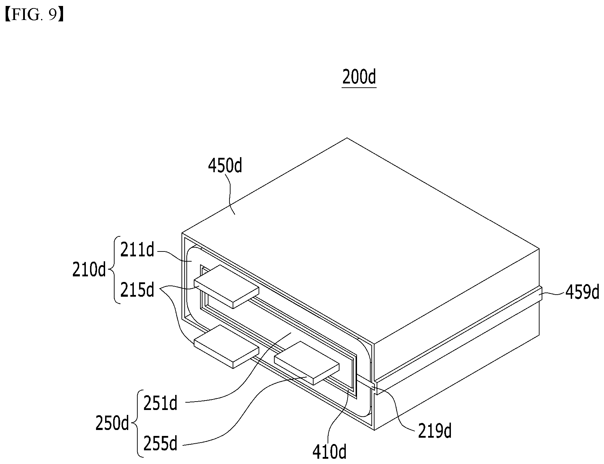

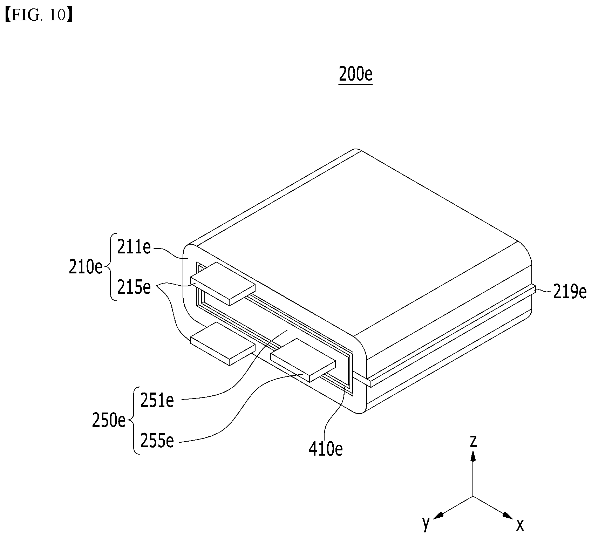

Further, as shown in FIG. 9 and FIG. 10, the electrode units 200d and 200e has the advantage that both end parts of the anodes 210d and 210e are jointed to each other, whereby even when the electrode units 200d and 200e are lifted upward, the shape of the electrode units 200d and 200e can be maintained, and the electrode units 200d and 200e can be assembled by a pick and place (P&P) system when manufacturing the electrode assembly 100.

Referring to FIG. 4 to FIG. 7, unlike those set forth above, in the electrode units 200, 200a and 200b included in the electrode assembly 100 according to another embodiment of the present disclosure, the first separators 410, 410a and 410b may be attached to the upper and lower surfaces of the unit cathodes 250, 250a and 250b and one side surface of the unit cathodes 250, 250a and 250b. More specifically, in the electrode units 200, 200a and 200b, both end parts of the first separator 410 may extend along the upper and lower surfaces of the unit cathodes 250, 250a, and 250b, respectively. As one example, as shown in FIG. 4 to FIG. 7, in the electrode units 200, 200a and 200b, one side surface of the unit cathodes 250, 250a and 250b may not be covered from the first separators 410, 410a and 410b.

Referring to FIG. 8 to FIG. 10, in the electrode units 200c, 200d and 200e included in the electrode assembly 100 according to the present embodiment, the first separators 410c, 410d and 410e may be attached to the upper and lower surfaces of the unit cathodes 250c, 250d and 250e and both side surfaces of the unit cathodes 250, 250a, and 250b. More specifically, both end parts of the first separators 410c, 410d and 410e may extend over the upper and lower surfaces of the unit cathodes 250c, 250d and 250e up to the other side surface of the unit cathodes 250c, 250d and 250e, respectively. In particular, at the other side surface of the unit cathodes 250c, 250d and 250e, both end parts of the first separators 410c, 410d and 410e may be joined to each other, or both end parts of the first separators 410c, 410d and 410e may be integrated with each other.

As one example, the first separators 410, 410a, 410b, 410c, 410d and 410e are joined to at least one surface of the unit cathodes 250, 250a, 250b, 250c, 250d and 250e by an ultrasonic or heat sealing method. As another example, the first separators 410, 410a, 410b, 410c, 410d and 410e may be joined to at least one surface of the unit cathodes 250, 250a, 250b, 250c, 250d and 250e by an adhesive agent or a cohesive agent. As another example, the first separators 410, 410a, 410b, 410c, 410d and 410e may be joined to at least one surface of the unit cathodes 250, 250a, 250b, 250c, 250d and 250e by a lamination method. However, the method is not limited thereto, and can be applied to the present embodiment as long as it is a method capable of joining the first separators 410, 410a, 410b, 410c, 410d and 410e to the unit cathodes 250, 250a, 250b, 250c, 250d and 250e.

Therefore, in the electrode assembly 100 according to the present embodiment, the electrode units 200, 200a, 200b, 200c, 200d and 200e may have a structure in which as shown in FIG. 5 to FIG. 10, first separators 410, 410a, 410b, 410c, 410d and 410e are attached to the unit cathodes 250, 250a, 250b, 250c, 250d and 250e in various shapes. At this time, in the state in which a separate separator is not joined to the first surface of the anodes 210, 210a, 210b, 210c, 210d and 210e, the unit cathodes 250, 250a, 250b, 250c, 250d and 250e may be inserted between the folded first surfaces of the anodes 210, 210a, 210b, 210c, 210d and 210e.

In addition, as described above, in the electrode assembly 100 according to the present embodiment, the electrode units 200c, 200d and 200e may have a structure in which as shown in FIG. 8 to FIG. 10, first separators 410c, 410d and 410e are attached to the upper and lower surfaces and both side surfaces of the unit cathodes 250c, 250d and 250e, which provides the advantage that stability against a risk of short circuit is further improved.

Referring to FIG. 3 and FIG. 4, in the electrode unit 200 included in the electrode assembly 100 according to another embodiment of the present disclosure, the assembly cathode 300 may be located on a second surface which is a surface opposite to the first surface of the anode 210. Further, the electrode unit 200 may further include a second separator 450 located between the second surface of the anode 210 and the assembly cathode 300. More specifically, at least a portion of the second separator 450 may be located between the second surface of the anode 210 and the assembly cathode 300.

Here, the second separator 450 separates the anode 210 and the assembly cathode 300 from each other, and provides a moving path for lithium ions. The separator may be used without particular limitation as long as it is used as a separator in a typical lithium secondary battery. Particularly, it is preferable that the separator has a low resistance against the ion migration of the electrolyte and has an excellent ability to impregnate the electrolyte.

Referring to FIG. 3 to FIG. 6, FIG. 8, and FIG. 9, in the electrode units 200, 200a, 200c and 200d included in the electrode assembly 100 according to another embodiment of the present disclosure, the second separators 450, 450a, 450c and 450d may be attached to the second surface of the anodes 210, 210a, 210c and 210d.

As shown in FIG. 3 and FIG. 4, in the electrode unit 200 according to one embodiment of the present disclosure, the second separator 450 extends along the second surface of the anode 210, and both end parts of the second separator 450 may extend to both end parts of the second surface of the anode 210, respectively.

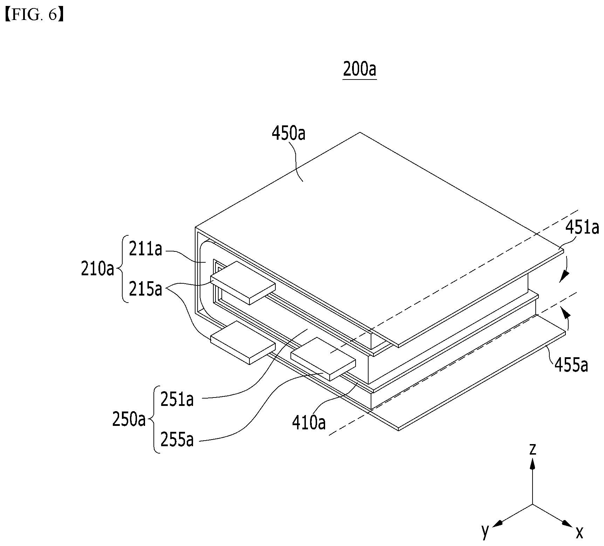

As shown in FIG. 5 and FIG. 6, in the electrode unit 200a according to another embodiment of the present disclosure, both end parts 451a and 455a of the second separator 450a may extend over the side surfaces of the both end parts of the anode 210a to the side surfaces of the unit cathode 250a, respectively. More specifically, both end parts 451a and 455a of the second anode 450a each extend toward the outside from both end parts of the second surface of the anode 210a, and both end parts 451a and 455a of the second separator 450a may be folded along the side surfaces of the both end parts of the anode 210a and the side surface of the unit cathode 250a, respectively. In particular, at the other side surface of the unit cathode 250a, both end parts 451a and 455a of the second separator 450a may be joined to each other. That is, as shown in FIG. 5, the electrode unit 200a may be formed with a second separator joint part 459a in which both end parts 451a and 455a of the second separator 450a are joined to each other.

As one example, both end parts 451a and 455a of the second separator 450a may be joined to each other by an ultrasonic or heat sealing method. As another example, both end parts 451a and 455a of the second separator 450a may be joined to each other by an adhesive agent or a cohesive agent. However, the method is not limited thereto, and can be applied to the present embodiment as long as it is a method capable of joining both end parts 451a and 455a of the second separator 450a.

Further, as shown in FIG. 8 and FIG. 9, in the electrode units 200c and 200d, both end parts of the anodes 210c and 210d may extend over the upper and lower surfaces of the unit cathodes 250c and 250d up to the other side surface of the unit anodes 250c and 250d, respectively. **In** particular, at the other side surface of the unit cathodes 250c and 250d, both end parts of the anodes 210c and 210d may be joined to each other. That is, as shown in FIG. 8 and FIG. 9, the electrode units 200c and 200d may be formed with anode joint parts 219c and 219d in which both end parts of the anodes 210c and 210d are joined to each other.

Here, as shown in FIG. 8, the second separator 450c may be attached to the second surface of the anode 210c, but the second separator 450c may not be attached to the side surface where the anode joint part 219c of the anode 210c is formed.

Unlike the same, as shown in FIG. 9, the second separator 450d is attached to the second surface of the anode 210d, wherein the second separator 450d may be attached up to the side surface where the anode joint part 219d of the anode 210d is formed. At this time, both end parts of the second separator 450d are joined in the same manner as described above, so that a second separator joint part 459d may be formed on one surface of the anode 210d. As one example, both end parts of the second separator 450d may be formed on the side surface where the anode joint parts 219c and 219d of the anode 210d are formed.

Therefore, in the electrode assembly 100 according to the present embodiment, the electrode units 200, 200a, 200c and 200d may have a structure in which as shown in FIG. 3 to FIG. 6, FIG. 8, and FIG. 9, second separators 450, 450a, 450c and 450d are attached to the second surface of the anodes 210, 210a, 210c and 210d in various shapes.

At this time, the assembly cathode 300 may be stacked on the second surface of the anode 210 in the state where a separate separator is joined. Further, since the assembly cathode 300 is not joined to a separate separator, it may be used as unit cathodes 250, 250a, 250b, 250c, 250d and 250e, or may be used in other manufacturing processes.

In particular, in the process of stacking the electrode units 200, 200a, 200c and 200d and the assembly cathode 300 as shown in FIG. 3 to FIG. 6, FIG. 8 and FIG. 9, the second surface of the anodes 210, 210a, 210c and 210d included in the electrode units 200, 200a, 200c and 200d can be protected by the second separators 450, 450a, 450c and 450d, so that the anodes 210, 210a, 210c and 210d can be prevented from being damaged during the production process.

In addition, in the electrode assembly 100 according to the present embodiment, the electrode unit 200a has the advantage that as shown in FIG. 5 and FIG. 6, the other side surface of the unit cathode 250a is covered with a second separator 450a, and thus the stability against a risk of short circuit is improved. Further, as shown in FIG. 9, the electrode unit 200d has the advantage that the other side surface of the unit cathode 250d is covered with both end parts of the anode 210d and the second separator 450d, and thus the stability against a risk of short circuit is improved.

Further, as shown in FIG. 5, FIG. 6 and FIG. 9, the electrode units 200a and 200d has a structure in which the other side surface of the unit cathodes 250a and 250d are covered with a second separator 450a and 450d, or both end parts of the anode 210d are joined to each other, whereby even when the electrode units 200a and 200d are lifted upward, the shape of the electrode units 200a and 200d can be maintained. That is, there is an advantage that the electrode units 200a and 200d can be assembled by a pick and place (P&P) system when manufacturing the electrode assembly 100.

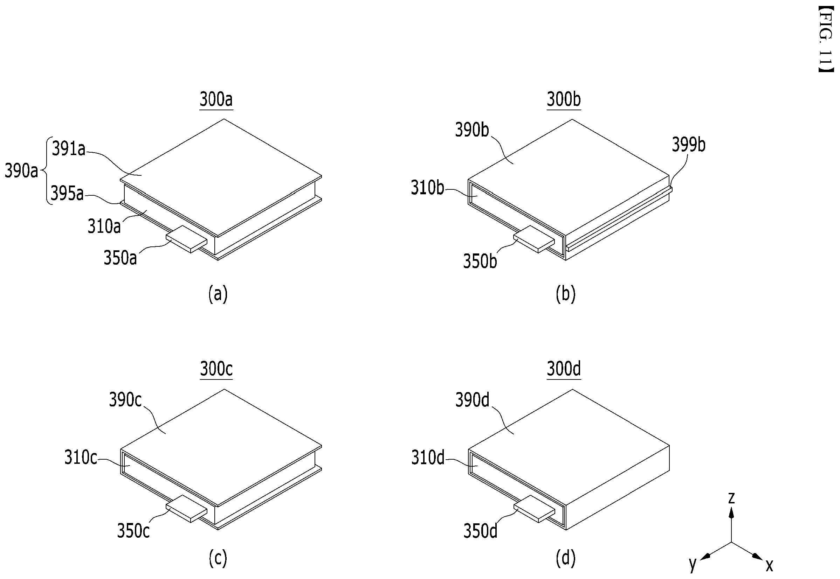

FIG. 11 is a perspective view of the assembly cathode included in the electrode assembly according to another embodiment of the present disclosure.

Referring to FIG. 4 and FIG. 11, the assembly cathode 300 may be located on the second surface of the anode 210 included in the electrode unit 200. Here, unlike FIG. 4, the second separator 450 of the electrode unit 200 may be omitted, and external separators 390a, 390b, 390c and 390d may be attached to at least partial surfaces of the assembly cathodes 300a, 300b, 300c and 300d. More specifically, at least a portion of the external separators 390a, 390b, 390c and 390d may be located between the assembly cathode 300a and the second surface of the anode 210.

The assembly cathodes 300, 300a, 300b, 300c and 300d may include assembly cathode active material layers 310, 310a, 310b, 310c and 310d and assembly cathode tabs 350, 350a, 350b, 350c and 350d, similarly to the unit cathode 250, and the rest of the description can be similar to those described above for the unit cathode 250.

The external separator 390 separates the anode 210 and the assembly cathode 300 from each other, and provides a moving path for lithium ions. The separator may be used without particular limitation as long as it is used as a separator in a typical lithium secondary battery. Particularly, it is preferable that the separator has a low resistance against the ion migration of the electrolyte and has an excellent ability to impregnate the electrolyte.

More specifically, referring to FIG. 11(a), the external separators 390a, 390b, 390c and 390d may include a first external separator 391a attached to the upper surface of the assembly cathode 300a, and a second external separator 395a attached to the lower surface of the assembly cathode 300a. As one example, the first external separator 391a and the second external separator 395a have a size larger than or equal to the upper and lower surfaces of the assembly cathode 300a, and the first external separator 391a and the second external separator 395a may have a size equal to each other.

Referring to FIGS. 11 (b) and (c), the external separators 390b and 390c are attached to the upper and lower surfaces of the assembly cathodes 300b and 300c and one side surface of the assembly cathodes 300b and 300c, and both end parts of the external separators 390b and 390c may extend along the upper and lower surfaces of the assembly cathodes 300b and 300c, respectively.

Further, referring to FIG. 11(b), both ends of the external separator 390b may extend over the upper and lower surfaces of the assembly cathode 300b up to the other side surface of the assembly cathode 300b. In particular, at the other side surface of the assembly cathode 300b, both end parts of the external separator 390b may be joined to each other. That is, as shown in FIG. 11(b), an external separator joint part 399b may be formed where both end parts of the external separator 390b are joined to each other. As one example, both end parts of the external separator 390b may be joined to each other by an ultrasonic or heat sealing method. As another example, both end parts of the external separator 390b may be joined to each other by an adhesive agent or a cohesive agent. However, the method is not limited thereto, and can be applied to the present embodiment as long as it is a method capable of joining both end parts of the external separator 390b.

Referring to FIG. 11(d), the external separator 390d may be attached to the upper and lower surfaces of the assembly cathode 300d and both side surfaces of the assembly cathode 300d. As one example, the external separator 390d may be attached to the upper and lower surfaces of the assembly cathode 300d and both side surfaces of the assembly cathode 300d in a state mutually integrated. As another example, the external separator 390d may be attached to the upper and lower surfaces of the assembly cathode 300d and both side surfaces of the assembly cathode 300d in a state mutually separated with respect to each surface of the assembly cathode 300d.

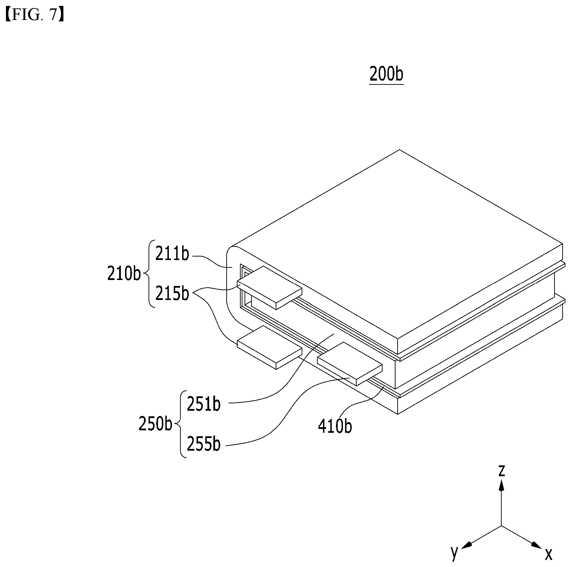

Therefore, in the electrode assembly 100 according to the present embodiment, the external separators 390a, 390b, 390c and 390d may be attached in various forms to at least one surface of the assembly cathodes 300a, 300b, 300c and 300d as shown in FIG. 11. At this time, as shown in FIG. 7 and FIG. 10, the assembly cathodes 300a, 300b, 300c and 300d to which the above-mentioned external separators 390a, 390b, 390c and 390d are joined may be stacked on the electrode units 200b and 200e where the second separator 450 is not joined to the second surface of the anodes 210b and 210e.

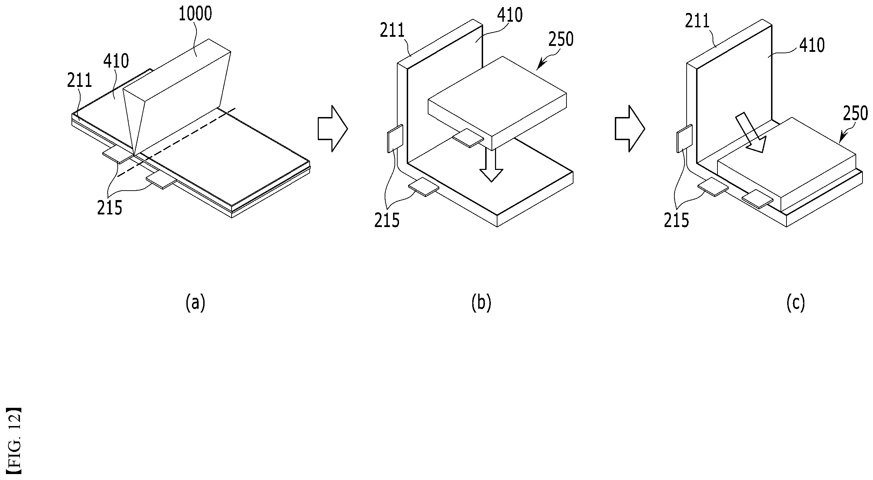

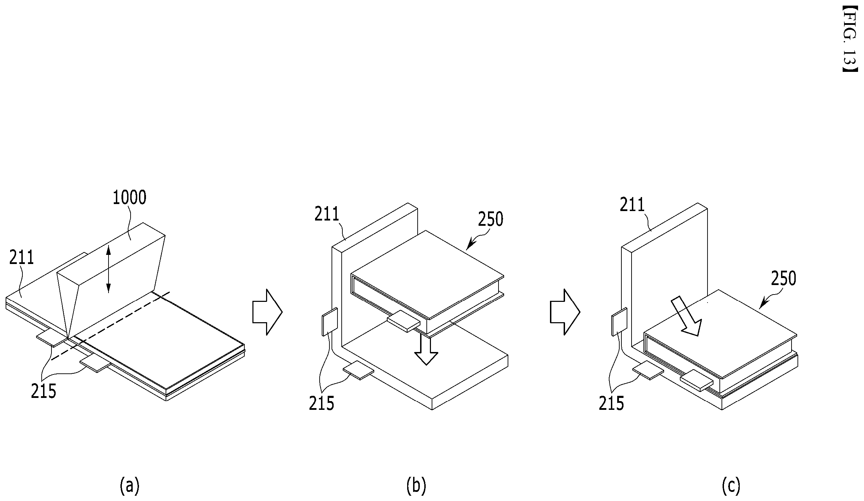

FIG. 12 and FIG.13 are diagrams showing a method for manufacturing an electrode unit included in an electrode assembly according to one embodiment of the present disclosure.

Referring to FIG. 12 and FIG. 13, a method for manufacturing an electrode assembly according to another embodiment of the present disclosure may be a method for manufacturing an electrode assembly for manufacturing the above-mentioned electrode assembly 100.

More specifically, referring to FIG. 3, FIG. 12(a) and FIG. 13(a), a method for manufacturing an electrode assembly according to the present embodiment may include a step of displaying a folding line at the center of the first surface of the anode 210. Here, the folding line display part 1000 may be located on the same vertical line as the position corresponding to the center of the first surface of the anode 210.

Further, referring to FIG. 3, FIG. 12(b) and FIG. 13(b), a method for manufacturing an electrode assembly according to the present embodiment may include a step of folding a first surface of the anode 210 on the basis of the folding line and a step of locating the unit cathode 250 on a partial surface of the folded first surface. Here, the first surface of the anode 210 may be primarily folded at a predetermined angle. As one example, the first surface of the anode 210 may be folded at an angle greater than 90 degrees.

As described above, in one example, as shown in FIG. 12, the first separator 410 may be attached onto the first surface of the anode 210, wherein a separate separator may not be attached to the outer surface of the unit cathode 250. In another example, as shown in FIG. 13, the first separator 410 is attached to at least a portion of the outer surface of the unit cathode 250, wherein a separate separator may not be attached onto the first surface of the anode 210.

Further, referring to FIG. 3, FIG. 12(c) and FIG. 13(c), a method for manufacturing an electrode assembly according to the present embodiment may include a step of folding the remaining surface of the first surface of the anode 210 toward the upper surface of the unit cathode 250 on the basis of the folding line.

Further, although not shown in FIG. 12 and FIG. 13, referring to FIG. 3, the method further includes a step of locating the assembly cathode 300 on a second surface which is a surface opposite to the first surface located on the upper surface of the unit cathode 250.

As described above, in one example, as shown in FIG. 3, the electrode assembly 100 includes a second separator 450 located between the second surface of the anode 210 and the assembly cathode 300, and the second separator 450 may be attached to the second surface of the anode 210, wherein a separate separator may not be attached to the outer surface of the assembly cathode 300. In another example, as shown in FIG. 11, the electrode assembly 100 includes an external separator 390 located between the second surface of the anode 210 and the assembly cathode 300, and the external separator 390 may be attached to at least a portion of the outer surface of the assembly cathode 300, wherein a separate separator may not be attached to the second surface of the anode 210.

Accordingly, as a method for manufacturing an electrode assembly according to the present embodiment repeats the above-mentioned steps, the electrode unit 200 and the assembly cathode 300 can be easily manufactured, and also the electrode assembly 100 in which the electrode unit 200 and the assembly cathode 300 are stacked can also be easily manufactured. In addition, the electrode unit 200 and the assembly cathode 300 manufactured through the above-described manufacturing method can be stored in a semi-finished product state, whereby even if an abnormality occurs during the production process, it can be stored separately, which provides the advantage that the productivity and manufacturing stability are improved.

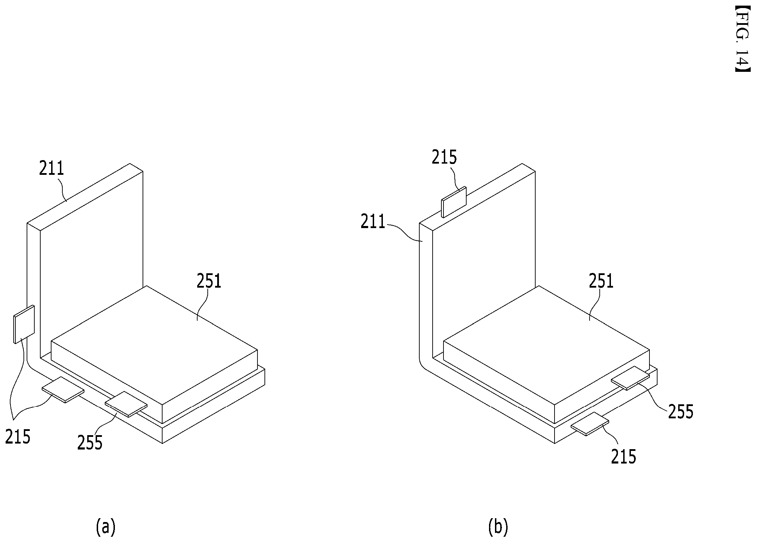

FIG. 14 to FIG. 16 are perspective views showing various arrangement shapes of a cathode tab and an anode in an electrode unit included in an electrode assembly according to another embodiment of the present disclosure.

In FIG. 14 to FIG. 16, the arrangement shape of the electrode tabs included in the electrode unit 200 will be described in detail. However, for convenience of explanation, similar to FIG. 14 to FIG. 16, the description will be based on a structure in which the first surface of the anode 210 is folded at a predetermined angle and the unit cathode 250 is disposed on the first surface, and the first separator 410 located between the anode 210 and the unit cathode 250 will be described based on an omitted structure.

Referring to FIG. 14, in the electrode unit 200 according to the present embodiment, when the first surface of the anode 210 is completely folded toward the unit cathode 250 in a state that the first surface of the anode 210 is folded at a predetermined angle, at least one anode tab 215 included in the anode 210 and the unit cathode tab 255 included in the unit cathode 250 may each extend in the same direction. More specifically, when the first surface of the anode 210 is completely folded toward the unit cathode 250 in a state that the first surface of the anode 210 is folded at a predetermined angle, at least one anode tab 215 is located on the same vertical lines as each other, and at least one anode tab 215 and the unit cathode tab 255 may be located on different vertical lines from each other.

Therefore, similar to FIG. 14, when the first surface of the anode 210 is completely folded toward the unit cathode 250 in a state that the first surface of the anode 210 is folded at a predetermined angle, the electrode unit 200 is configured such that an anode tab 215 and a unit cathode tab 255 are located in a single direction, whereby the space required to arrange the electrical connection structure of the anode tab 215 and the unit cathode tab 255 between other electrode units 200 can be minimized.

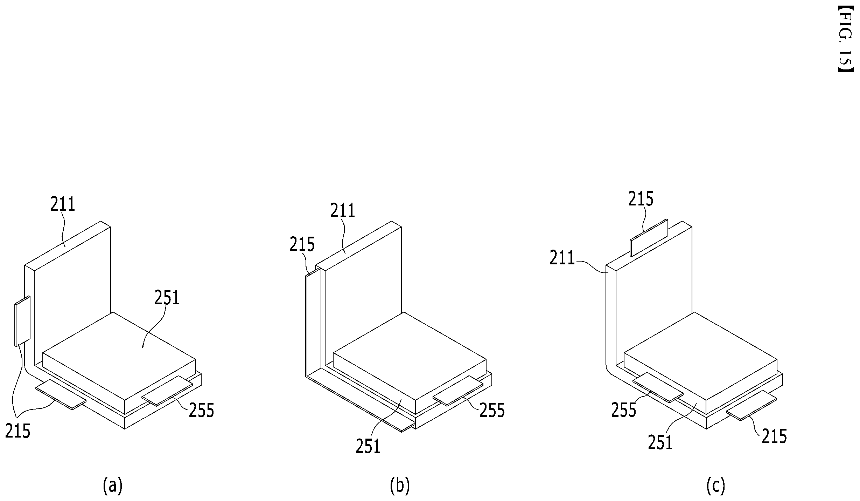

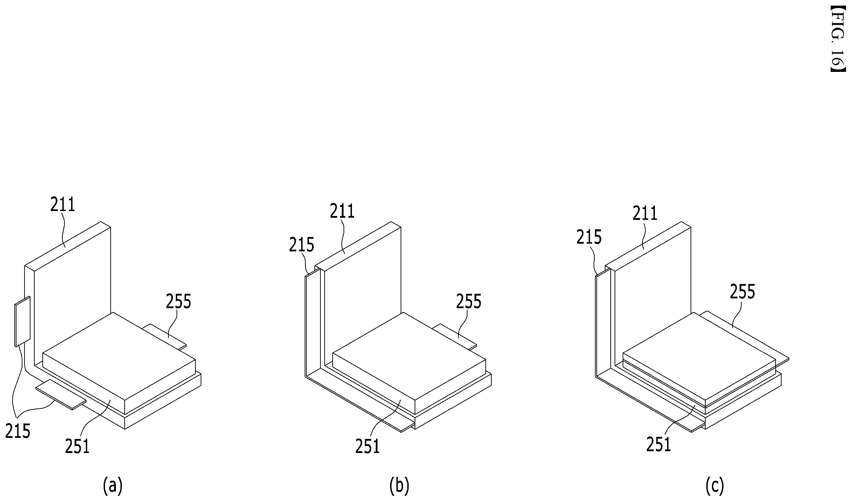

Referring to FIG. 15 and FIG. 16, in the electrode unit 200 according to the present embodiment, when the first surface of the anode 210 is completely folded toward the unit cathode 250 in a state that the first surface of the anode 210 is folded at a predetermined angle, at least one anode tab 215 included in the anode 210 and the unit cathode tab 255 included in the unit cathode 250 may extend in directions different from each other, respectively.

As one example, referring to FIG. 15 (b), FIG. 16(b) and FIG. 16 (c), in the electrode unit 200 according to the present embodiment, at least one anode tab 215 may be a single anode tab 215 extending along one side surface of the anode 210.

Therefore, as shown in FIG. 15 and FIG. 16, when the first surface of the anode 210 is completely folded toward the unit cathode 250 in a state that the first side of the anode 210 is folded at a predetermined angle, the electrode unit 200 is configured such that an anode tab 215 and a unit cathode tab 255 are located in both directions, whereby the anode tab 215 and the unit cathode tab 255 may not interfere with each other. That is, in the case of the present embodiment, there is an advantage that the notching process of the anode tab 215 and the unit cathode tab 255 can be omitted. More specifically, the manufacturing time due to the notching process of the anode tab 215 and the unit cathode tab 255 can be shortened, and defect problems occurring in the notching process can be minimized.

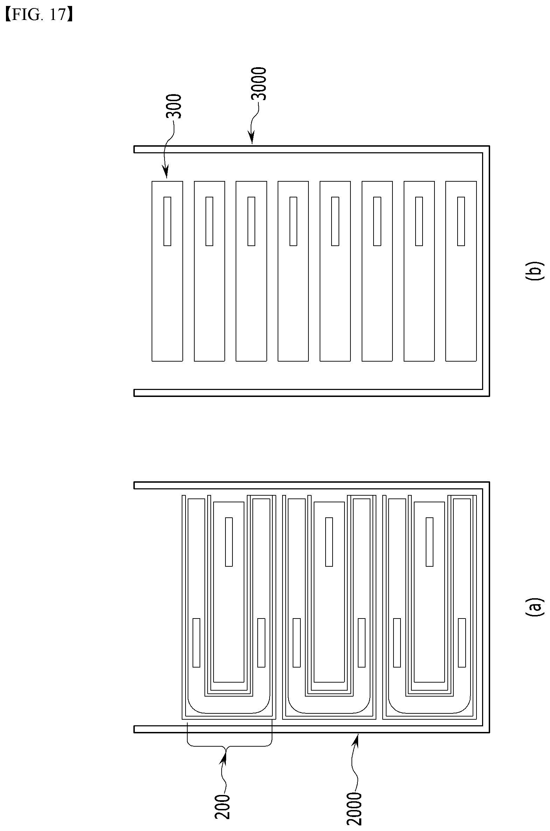

FIG. 17 is a diagram showing a shape in which an electrode unit and an assembly cathode included in the electrode assembly according to one embodiment of the present disclosure are stored.

Referring to FIG. 17, in the electrode assembly 100 according to the present embodiment, the electrode unit 200 may be stored in a stacked state on the electrode unit tray 2000, and the assembly cathode 300 may be stored in a stacked state on the assembly cathode tray 3000. However, although not shown in FIG. 17, the electrode unit 200 can be replaced with electrode units 200a, 200b, 200c, 200d and 200e as shown in FIG. 5 to FIG. 10, and the assembly cathode 300 can be replaced with assembly cathodes 300a, 300b, 300c, and 300d as shown in FIG. 11.

Accordingly, unlike the conventional stacked type electrode assembly 10 and the zigzag type electrode assembly 20, in the electrode assembly 100 according to the present embodiment, the electrode unit 200 and the assembly cathode 300 may be manufactured separately and then stored in a semi-finished product state in the electrode unit tray 2000 or the cathode tray 3000, respectively. That is, in the case of the electrode assembly 100 according to the present embodiment, the electrode unit 200 and the assembly cathode 300 can be manufactured and stored separately even if some processes are interrupted during the production process, which provides the advantage that the productivity and manufacturing stability is improved.

While preferred embodiments of the present disclosure have been described in detail hereinabove, it is to be well understood that the scope of the present disclosure is not limited thereto, and various modifications and improvements made by those skilled in the art using basic concepts of the present disclosure, which are defined in the following claims, also fall within the scope of the present disclosure.

### [Description of Reference Numerals]

100: electrode assembly
200: electrode unit
210: anode
211: anode active material layer
215: anode tab
251: unit cathode active material layer
255: unit cathode tab
250: unit cathode
300: assembly cathode
310: assembly cathode active material layer
350: assembly cathode tab
390a, 390b, 390c, 390d: external separator
410: first separator
450: second separator
2000: electrode unit tray
3000: assembly cathode tray

## Claims

1. An electrode assembly in which an electrode unit and an assembly cathode are sequentially stacked,
wherein the electrode unit comprises,
an anode whose first surfaces are folded in directions facing each other;
a unit cathode located between the folded first surfaces; and
a first separator located between the first surface and the unit cathode,
wherein the first surface surrounds the upper and lower surfaces of the unit cathode and one side surface of the unit cathode, and both end parts of the first surface extend along the upper and lower surfaces of the unit cathode.

2. The electrode assembly according to claim 1, wherein:
the first separator is attached to the first surface, and
the both end parts of the first separator extend to both end parts of the first surface.

3. The electrode assembly according to claim 2, wherein:
the both end parts of the first separator extend over the upper and lower surfaces of the unit cathode up to the other side surface of the unit cathode, respectively, and
at on the other side surface of the unit cathode, the both end parts of the first separator are joined to each other.

4. The electrode assembly according to claim 2, wherein:
both end parts of the anode extend over the upper and lower surfaces of the unit cathode up to the other side surface of the unit cathode, respectively, and
at the other side surface of the unit cathode, both end parts of the anode are joined to each other.

5. The electrode assembly according to claim 1, wherein:
the first separator is attached to the upper and lower surfaces of the unit cathode and both side surfaces of the unit cathode.

6. The electrode assembly according to claim 1, wherein:
the first separator is attached to the upper and lower surfaces of the unit cathode and one side surface of the unit cathode, and
the both end parts of the first separator extend along the upper and lower surfaces of the unit cathode, respectively.

7. The electrode assembly according to claim 6, wherein:
the both end parts of the first separator extend over the upper and lower surfaces of the unit cathode up to the other side surface of the unit cathode, respectively, and
at the other side surface of the unit cathode, the both end parts of the first separator are joined to each other.

8. The electrode assembly according to claim 1, wherein:
the assembly cathode is located on a second surface which is a surface opposite to the first surface,
the electrode assembly further includes a second separator which is located between the assembly cathode and the second surface, and is attached to the second surface, and
the both end parts of the second separator extend to both end parts of the second surface.

9. The electrode assembly according to claim 8, wherein:
both end parts of the second separator extend over the side surfaces of both end parts of the anode to the side surface of the unit cathode, respectively, and
at the other side surface of the unit cathode, the both end parts of the second separator are joined to each other.

10. The electrode assembly according to claim 9, wherein:
the both end parts of the anode extend over the upper and lower surfaces of the unit cathode up to the other side surface of the unit cathode, respectively, and
at the other side surface of the unit cathode, the both end parts of the anode are joined to each other.

11. The electrode assembly according to claim 1, wherein:
the assembly cathode is located on a second surface which is a surface opposite to the first surface, and
the electrode assembly further includes an external separator which is located between the assembly cathode and the second surface, and is attached to at least a portion of the surface of the assembly cathode.

12. The electrode assembly according to claim 11, wherein:
the external separator includes a first external separator attached to the upper surface of the assembly cathode and a second external separator attached to the lower surface of the assembly cathode.

13. The electrode assembly according to claim 11, wherein:
the external separator is attached to the upper and lower surfaces of the assembly cathode and both side surfaces of the assembly cathode.

14. The electrode assembly according to claim 11, wherein:
the external separator is attached to the upper and lower surfaces of the assembly cathode and one side surface of the assembly cathode, and
the both end parts of the external separator extend along the upper and lower surfaces of the assembly cathode.

15. The electrode assembly according to claim 14, wherein:
the both end parts of the external separator extend over the upper and lower surfaces of the assembly cathode up to the other side surface of the assembly cathode, and
at the other side surface of the assembly cathode, the both end parts of the external separator are joined to each other.

16. The electrode assembly according to claim 1, wherein:
at least one anode tab included in the anode and a unit cathode tab included in the unit cathode extend in the same direction, respectively,
the at least one anode tab is located on the same vertical lines, and
the at least one anode tab and the unit cathode tab are located on vertical lines different from each other

17. The electrode assembly according to claim 1, wherein:
at least one anode tab included in the anode and the unit cathode tab included in the unit cathode extend in directions different from each other, respectively.

18. The electrode assembly according to claim 17, wherein:
the at least one anode tab is a single anode tab which extends along one side of the anode.

19. A method for manufacturing the electrode assembly according to claim 1, the method comprising the steps of:
displaying a folding line displayed at the center of the first surface of the anode;
folding the first surface of the anode on the basis of the folding line;
locating the unit cathode on a partial surface of the folded first surface; and
folding the remaining surface of the first surface toward the upper surface of the unit cathode on the basis of the folding line,
wherein the first separator is attached onto the first surface, or is attached to at least a portion of the outer surface of the unit cathode.

20. The method for manufacturing the electrode assembly according to claim 19, further comprising locating the assembly cathode on a second surface which is a surface opposite to the first surface located on the upper surface of the unit cathode,
wherein the electrode assembly comprises a second separator or an external separator located between the second surface and the assembly cathode, and
wherein the second separator is attached onto the second surface, and the external separator is attached to at least a portion of the outer surface of the assembly cathode.
